**Europäisches Patentamt**

**European Patent Office**

**Office européen des brevets**

(19)

(11) Veröffentlichungsnummer: **0 195 264**
**A2**

(12) **EUROPÄISCHE PATENTANMELDUNG**

(21) Anmeldenummer: **86102120.2**

(22) Anmeldetag: **19.02.86**

(51) Int. Cl.⁴: **H 02 K 5/22**
**H 02 K 7/14**

(30) Priorität: **22.03.85 DE 8508520 U**

(43) Veröffentlichungstag der Anmeldung:
**24.09.86 Patentblatt 86/39**

(84) Benannte Vertragsstaaten:
**DE FR GB**

(71) Anmelder: **ROBERT BOSCH GMBH**
**Postfach 50**
**D-7000 Stuttgart 1(DE)**

(72) Erfinder: **Linder, Walter, Dipl.-Ing.**
**Sumpfstr. 196**
**CH-4554 Etziken(CH)**

(72) Erfinder: **Reupp, Urs, Dipl.-Ing.**
**Dürrbachstr. 53**
**CH-4500 Solothurn(CH)**

(72) Erfinder: **Schädlich, Fritz, Dipl.-Ing.**
**Panoramastrasse 4**
**D-7022 Leinfelden-Echterdingen(DE)**

(54) Elektrisch betriebene Handwerkzeugmaschine mit einem abnehmbaren Gehäuseteil.

(57) Die Neuerung betrifft eine elektrisch betriebene Handwerkzeugmaschine (1) mit einem abnehmbaren ersten Gehäuseteil (9). Der Gehäuseteil (9) enthält als Stromquelle einen Akku (10) oder einen Batteriepack. Ein ebenfalls abnehmbar gestalteter zweiter Gehäuseteil (12) der an die Handwerkzeugmaschine (1) paßt, enthält einen Transformator (13) und ist mit einem Netzkabel (14) ausgestattet.

FIG. 1

EP 0 195 264 A2

Croydon Printing Company Ltd.

R. 13926

0195264

12.3.1985 Br/Wl

ROBERT BOSCH GMBH, 7000 STUTTGART 1

Elektrisch betriebene Handwerkzeugmaschine
mit einem abnehmbaren Gehäuseteil

Stand der Technik

Die Neuerung geht aus von einer elektrisch betriebenen
Handwerkzeugmaschine nach der Gattung des Hauptanspruchs.
Handwerkzeugmaschinen dieser Art sind in bekannter Weise
entweder mit einem auswechselbaren Akku oder mit auswechselbaren Batterien bestückt. Für Kleingeräte dieser Art ist
es auch bekannt, die Stromversorgung mittels eines in ein
Netzkabel eingeschalteten, vom Handwerkzeug getrennten
Transformators zu gewährleisten. Nachteilig ist, daß mit
Akku oder Batterien bestückte Handwerkzeugmaschinen stets
aus diesen Stromquellen gespeist werden müssen, auch wenn
ein Netzanschluß zur Verfügung stünde und die Akkuladung
oder die Batterien geschont werden könnten.

Vorteile der Neuerung

Die erfindungsgemäße Handwerkzeugmaschine mit den kennzeichnenden Merkmalen des Hauptanspruchs hat demgegenüber den Vorteil, sowohl mit einem Akku oder einem Batterie-

...

- 2 -

pack als auch mittels eines in gleicher Weise angesetzten
Transformators betrieben werden zu können.

Zeichnung

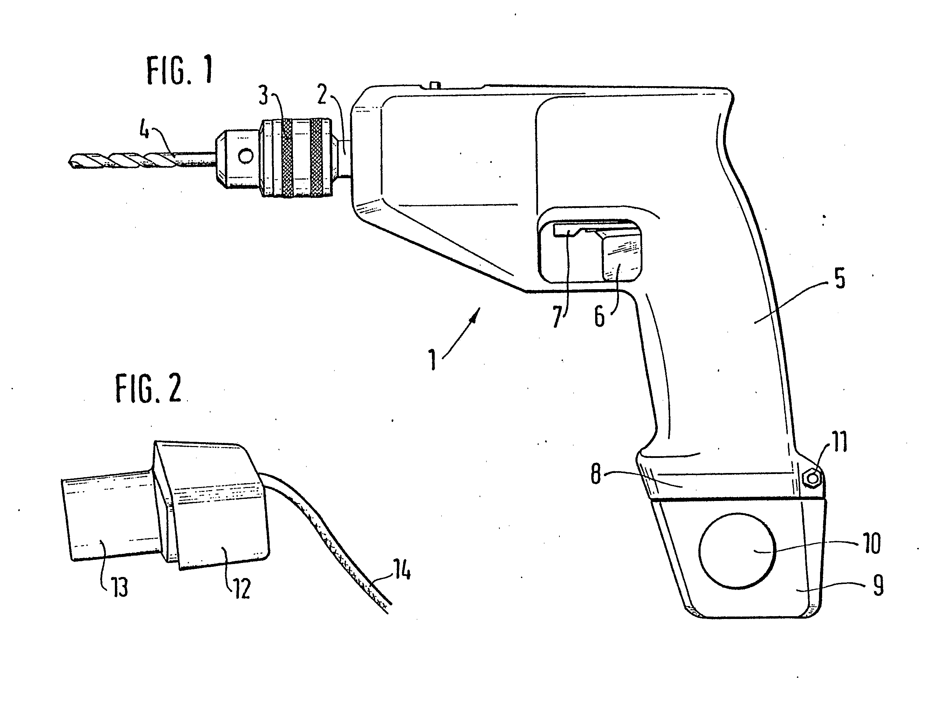

Ein Ausführungsbeispiel der Neuerung ist in der Zeichnung
dargestellt und in der nachfolgenden Beschreibung näher
erläutert. Es zeigen Figur 1 eine Seitenansicht einer
elektrisch betriebenen Handbohrmaschine mit einem abnehmbaren Gehäuseteil und Figur 2 eine Ansicht eines
neuerungsgemäß mit einem Transformator ausgestatteten
Gehäuseteils, das anstelle eines Gehäuseteils gemäß
Figur 1 an die Handbohrmaschine angesetzt werden kann.

Beschreibung des Ausführungsbeispiels

Eine Handbohrmaschine 1 trägt auf einer Abtriebsspindel
2 ein Spannfutter 3, in das ein Bohrer 4 eingespannt
werden kann. Das Gehäuse der Handbohrmaschine 1 hat einen
Handgriff 5 und in dessen Nähe ein Betätigungsglied 6.
Mittels eines Hebels 7 kann das Betätigungsglied 6 blockiert
oder freigegeben werden. Am freien Ende 8 des Handgriffs
5 ist ein Gehäuseteil 9 abnehmbar befestigt. Dieser Gehäuseteil 9 nimmt entweder einen Akku 10 oder einen
Batteriepack auf und ist außer mit den mechanischen Befestigungsmittel 11 mit trennbaren elektrischen Kontakten
versehen, die hier nicht näher dargestellt sind. Ein in
Figur 2 dargestelltes Gehäuseteil 12 entspricht äußerlich dem Gehäuseteil 9. Es nimmt einen Transformator 13
auf und ist mit einem Netzkabel 14 versehen.

...

0195264

19926

Im für diese Maschinen vorgesehenen Einsatz dient der
Akku 10 bzw. ein entsprechender Batterie-Pack als Stromquelle für den elektrischen Antriebsmotor der Handbohrmaschine 1. Für Anwendungsfälle bei denen ein Netzanschluß
in der Nähe ist, wird der Gehäuseteil 9 mit dem Akku 10
gegen den Gehäuseteil 12 mit dem Transformator 13 ausgetauscht. Das dort angeschlossene Netzkabel ermöglicht
den Netzbetrieb und die Ladung des Akkus bzw. der Batterien wird geschont.

19926

0195264

12.3.1985 Br/Wl

ROBERT BOSCH GMBH, 7000 STUTTGART 1

Ansprüche

1. Elektrisch betriebene Handwerkzeugmaschine mit einem abnehmbaren Gehäuseteil, der einen Akku oder einen Batteriepack zur Stromversorgung des elektrischen Antriebsmotors aufnehmen kann, dadurch gekennzeichnet, daß der abnehmbare Gehäuseteil (9) gegen einen ebenso ansetzbaren und abnehmbaren Gehäuseteil (12) auswechselbar ist, der einen Transformator (13) enthält und mit einem Netzanschlußkabel (14) versehen ist.

2. Elektrisch betriebene Handwerkzeugmaschine nach Anspruch 1, dadurch gekennzeichnet, daß der abnehmbare Gehäuseteil (9, 12) am freien Ende des Handgriffs (5) der Handwerkzeugmaschine (1) angesetzt ist.

FIG. 1

FIG. 2